(19) **Europäisches Patentamt**
**European Patent Office**
**Office européen des brevets**

(11) **EP 2 446 243 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(51) Int Cl.:
***G01N 7/10*** *(2006.01)*

(21) Anmeldenummer: **10723142.5**

(86) Internationale Anmeldenummer:
**PCT/EP2010/058308**

(22) Anmeldetag: **14.06.2010**

(87) Internationale Veröffentlichungsnummer:
**WO 2010/149519 (29.12.2010 Gazette 2010/52)**

(54) **WASSERSTOFFSENSOR**

HYDROGEN SENSOR

CAPTEUR D'HYDROGÈNE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **24.06.2009 DE 102009030180**

(43) Veröffentlichungstag der Anmeldung:
**02.05.2012 Patentblatt 2012/18**

(73) Patentinhaber: **Inficon GmbH**
**50968 Köln (DE)**

(72) Erfinder: **WETZIG, Daniel**
**50999 Köln (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**DE-C1- 19 833 601     US-A- 3 731 523**
**US-A- 3 866 460**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Wasserstoffsensor mit einem druckdichten Gehäuse, welches mit einer Membran aus Palladium abgeschlossen ist und einen Drucksensor enthält.

Ein derartiger Wasserstoffsensor ist in WO 2006/008253 A1 (Inficon) beschrieben. Der Wasserstoffsensor weist eine Membran auf, die selektiv für Wasserstoff durchlässig ist und ein druckdichtes Gehäuse abschließt. Das Gehäuse enthält einen Penning-Drucksensor mit zwei parallelen Kathodenplatten, zwischen denen ein Anodenring angeordnet ist. Eine Spannungsquelle liefert eine Gleichspannung, die zwischen die Kathodenplatten und den Anodenring gelegt wird. Das zu einer Penning-Entladung notwendige Magnetfeld wird von einem außerhalb des geschlossenen Gehäuses angebrachten Permanentmagneten erzeugt. An das Gehäuse ist eine Getterpumpe angeschlossen, die Wasserstoff ansaugt und den Wasserstoffpartialdruck verringert. Die Detektionskammer des Gehäuses ist mit der Getterpumpe über einen Drosselkanal verbunden. Tritt durch die für Wasserstoff selektiv durchlässige Wand Wasserstoff aus der Atmosphäre in die Detektionskammer ein, erhöht sich der Druck in der Detektionskammer. Weil der Wasserstoff durch den Drosselkanal nur mit einer Verzögerung zu der Getterpumpe gelangt, erhöht sich der Druck der Detektionskammer. Dieser Druckanstieg wird durch den Drucksensor erkannt und als Eindringen von Wasserstoff bewertet. Der Partialdruck in der Detektionskammer ist auch im eingeschwungenen Zustand geringer als der Partialdruck der Umgebung.

In DE 100 31 882 A1 (Leybold) ist ein Sensor für Helium oder Wasserstoff beschrieben, der ein vakuumdichtes Gehäuse aufweist, welches einen selektiv wirkenden Durchlass für das festzustellende Gas aufweist. Das Gehäuse besteht aus Glas und der selektiv wirkende Durchlass ist eine Membran aus einem Siliziumwerkstoff, auf der eine mit Durchbrechungen versehene Siliziumscheibe sowie eine Heizung angeordnet sind. In dem Gehäuse befindet sich ein Penning-Sensor. Das Gehäuse ist nicht an eine Vakuumpumpe angeschlossen. Die Penning-Entladung des Penning-Sensors fungiert zusätzlich als Ionengetterpumpe.

In J. Vac. Sci. Technol. A 26(3), May/Jun 2008 der American Vacuum Society, Seiten 352-359, ist unter dem Titel "On the gas species dependence of Pirani vacuum gauges" von Karl Jousten ein Aufsatz erschienen, in welchem das Prinzip des Pirani-Drucksensors beschrieben ist. Es handelt sich dabei um ein Gerät, das die thermische Leitfähigkeit von Gasen misst und dadurch den Druck ermittelt. Dabei wird die Tatsache benutzt, dass die thermische Leitfähigkeit dem Druck proportional ist. Es wird der Wärmetransport von einem Heizelement durch das umgebende Gas zu einer Umhüllung von mehr oder weniger konstanter Temperatur gemessen. Das Heizelement ist Teil einer Wheatstone'schen Brücke, die derart betrieben ist, dass die zur Aufrechterhaltung der Temperatur erforderliche Heizleistung gemessen wird. Bei anderen Pirani-Sensoren wird die Heizleistung konstant gehalten und der Widerstand bzw. die Temperatur des Heizelements wird als Druckindikator gemessen. Pirani-Drucksensoren müssen für das jeweilige Gas entsprechend geeicht werden, da gasabhängig variierende Korrekturfaktoren bei der Auswertung der Signale zu berücksichtigen sind.

Der vorliegenden Erfindung liegt die Aufgabe zugrunde, einen Wasserstoffsensor zu schaffen, der eine hohe Wasserstoffempfindlichkeit und eine niedrige Ansprechzeit hat sowie kleinformatig hergestellt werden kann.

Der erfindungsgemäße Wasserstoffsensor ist durch den Patentanspruch 1 definiert. Er weist ein evakuiertes, druckdichtes, pumpenloses Gehäuse auf. Dies bedeutet, dass das Gehäuse nicht an eine Pumpe, z.B. Getterpumpe, angeschlossen ist. Das Gehäuse ist mit einer Palladiummembran abgeschlossen, welche selektiv nur für Wasserstoff durchlässig ist. Dies hat zur Folge, dass sich in dem Gehäuse ein Gesamtdruck einstellt, der gleich dem Partialdruck des Wasserstoffs in der Umgebungsatmosphäre ist.

Eine Besonderheit besteht darin, dass die Membran aus Palladium auf einem ersten Träger und ein nicht-gaszehrender Drucksensor auf einem zweiten Träger angeordnet ist. Die beiden Träger sind entweder direkt verbunden oder durch ein Glasrohr auf Abstand gehalten. Sowohl die Membran aus Palladium als auch der Pirani-Drucksensor weisen eine Heizung auf, sind aber thermisch voneinander entkoppelt, so dass der von dem Heizelement des Drucksensors ausgehende Wärmetransport durch die Beheizung der Palladiummembran nicht störend beeinflusst wird. Dabei ist zu berücksichtigen, dass die Palladiummembran auf eine konstante Temperatur beheizt wird, so dass die durch sie hervorgerufenen thermischen Wirkungen innerhalb des Gehäuses gleichbleibend sind.

Erfindungsgemäß wird ein nicht-gaszehrender Drucksensor benutzt. Hierzu gehören Wärmeleitungsmanometer und Kapazitätsmanometer. Ein Pirani-Drucksensor gehört zu den Wärmeleitungsmanometern. Hierzu gehören ferner solche Manometer, bei denen die Wärmeleitung von einem Leiter auf einen anderen Leiter durch das umgebende Gas gemessen wird. Die Wärmeleitung ist abhängig von dem Gasdruck. Kapazitätsmanometer enthalten eine Membran, auf die einseitig ein Gasdruck wirkt. Die Membran ist Bestandteil eines Kondensators, dessen Kapazität sich druckabhängig verändert. Die Kapazitätsänderung wird elektrisch gemessen. Dagegen ist ein Penning-Drucksensor gaszehrend. Zu den gaszehrenden Sensoren gehören alle ionisierenden Sensoren.

Ein Wärmeleitungs-Drucksensor, wie das Pirani-Manometer, hat den Vorteil einer hohen Empfindlichkeit und einer geringen Baugröße. In dem Gehäuse wird ohne Pumpe bzw. ohne Saugvermögen gearbeitet. Im Inneren des Gehäuses stellt sich der gleiche $H_2$-Partial-

druck ein wie in der Sensorumgebung. Die Zeitkonstante τ des Sensors, nämlich die Zeit bis zum 63%-igen Druckausgleich, ist in erster Linie durch das Verhältnis von Volumen und Membranleitwert gegeben:

$$\tau = \text{Volumen/Leitwert.}$$

Bei einer Wasserstoffkonzentration von c = 1ppm bei atmosphärischem Druck beträgt der Wasserstoffpartialdruck $p_{H2} = 1 \bullet 10^{-3}$ mbar 1mbar =100 Pa. Dieser Druck kann von kommerziellen Pirani-Sensoren sicher nachgewiesen werden. Mit dem MikroPirani der Firma MKS können Totaldrücke bis unter $10^{-4}$ mbar nachgewiesen werden. Durch höhere Pirani-Filamenttemperaturen ist eine weitere Empfindlichkeitssteigerung möglich.

Die Vorteile der Erfindung bestehen in hoher Empfindlichkeit, kurzer Zeitkonstante, Vermeidung der Querempfindlichkeit zu anderen Gasen als Wasserstoff und einer langen Lebensdauer. Ein weiterer wesentlicher Vorteil ist die Kleinformatigkeit, die es erlaubt, den Wasserstoffsensor in den Handgriff eines Schnüffellecksuchers zu integrieren. Ein derartiger Schnüffellecksucher benötigt nur eine Gas fördernde Vorrichtung zum Einsaugen der Atmosphäre und keine Vakuumpumpe für die Testgasanalyse. Der Wasserstoffsensor arbeitet unter atmosphärischem Druck.

Bei dem erfindungsgemäßen Wasserstoffsensor ist ohne Saugvermögen im Inneren des Gehäuses der $H_2$-Partialdruck im Gehäuse gleich dem Umgebungspartialdruck. Die Zeitkonstante des Sensors ist gegeben durch das Verhältnis des Sensorzellen-Innenvolumens V und Wasserstoffleitwert $L_{Membran}$ der Palladiummembran:

$$\tau_{63} = \frac{V}{L_{Membran}} \qquad (1)$$

Wäre im Sensorinneren ein Saugvermögen S vorhanden, so wäre das Verhältnis des Partialdrucks in der Umgebung $p_1$ zu dem Partialdruck im Inneren des Sensors $p_0$ wie folgt gegeben:

$$\frac{p_1}{p_0} = \frac{S}{L} + 1 \qquad (2),$$

wobei L der Leitwert der Membran ist.

In diesem Fall wäre die Sensorzeitkonstante aus dem Verhältnis von Sensorzellenvolumen V und Saugvermögen S gegeben:

$$\tau_{63} = \frac{V}{S} \qquad (3)$$

Ein Saugvermögen im Sensorinneren würde zwar ein relativ großes Sensorvolumen erlauben, ohne dass die Sensorzeitkonstante die Grenze von 1s übersteigt, jedoch ist in diesem Fall der Wasserstoffpartialdruck im Sensorinneren reduziert (siehe Gl. 2), so dass der Druck mit einem Pirani-System nicht ausreichend genau nachgewiesen werden kann.

Erfindungsgemäß wird ohne Saugvermögen im Inneren des Gehäuses bei einem Sensorvolumen von etwa 1cm³ eine Sensorzeitkonstante von unter 1s erreicht. Der Totaldruck kann in einem solchen System mit einem mikromechanischen Pirani-System gemessen werden. Die Empfindlichkeit eines Pirani-Systems im Sensor zum Nachweis von 1ppm Wasserstoff bei 1000 mbar Umgebungsdruck ist ausreichend. Die Gasartabhängigkeit des Pirani-Nachweises wirkt sich bei Wasserstoff positiv auf die Nachweisempfindlichkeit aus.

Wasserstoff kann mit einem Wärmeleitungsmanometer empfindlicher als Stickstoff nachgewiesen werden. Der Wärmeleitungskoeffizient von Wasserstoff ist um den Faktor 7,2 höher als von $N_2$. Zudem kann ein Heizfilament in reiner Wasserstoffatmosphäre mit einer höheren Temperatur betrieben werden, was ebenfalls die Nachweisgrenze begünstigt.

Das Material Palladium, aus dem die selektiv für Wasserstoff durchlässige Wand des Gehäuses besteht, hat die Wirkung, dass es nur für Wasserstoff und dessen Isotope ($H_2$, $D_2$, $T_2$, HD, HT und DT) permeabel ist. Für alle anderen Elemente ist die Permeabilität vernachlässigbar klein. Wasserstoff kann daher von anderen Gasen separiert werden. Die Membran aus Palladium ist auf einem Träger aus Silizium vorhanden und bildet mit diesem einen Palladiummembranchip. Bei einem praktisch ausgeführten Chip hat die Palladiummembran einen hohen Wasserstoff-Leitwert im Bereich von 0,6 bis 1,7cm³/s bei 300°C. Der Siliziumträger dient der Stützung der dünnen Palladiummembran, damit diese dem Atmosphärendruck standhält. Die Membran aus Palladium hat vorzugsweise eine Dicke von weniger als 5μ, insbesondere von weniger als 2μ. Der die Membran tragende erste Träger weist Durchbrechungen oder Fenster von 200μm Weite auf und hält einer Totaldruckdifferenz von P > 1000 mbar stand.

Bei Verwendung von porösem Silizium als Trägermaterial ist eine deutlich dünnere Membrandicke möglich. Der Leitwert der Membran ist umgekehrt proportional zu ihrer Dicke. Es sind aber auch andere Trägermaterialien möglich, wie Stahl oder Palladium.

In einem gekapselten Volumen von 1cm³, das durch eine Pd-Membran mit einer Fläche von 1,5cm² und einer Dicke von 1μm abgeschlossen ist, stellt sich der Wasserstoffpartialdruck der Umgebung mit einer Zeitkonstante von τ= 1s ein. Bei geringerem Sensorvolumen und/oder dünnerer Pd-Membranfläche sind noch kürzere Zeitkonstanten erzielbar. Dadurch besteht auch die Möglichkeit, bei einem Lecksucher die Gasmodulationstechnik einzusetzen.

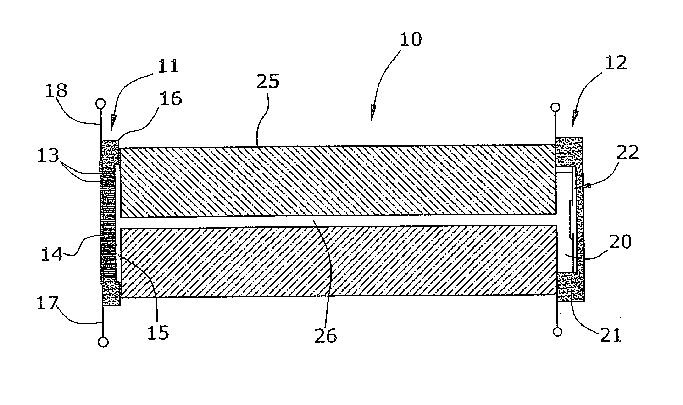

Im Folgenden wird unter Bezugnahme auf die einzige Figur der Zeichnung ein Ausführungsbeispiel der Erfindung näher erläutert.

Die Zeichnung zeigt ein Ausführungsbeispiel eines Wasserstoffsensors nach der vorliegenden Erfindung.

Der Wasserstoffsensor weist ein druckdichtes Gehäuse 10 auf, das an einem Ende durch einen ersten Träger 11 aus Silizium und an dem gegenüberliegenden Ende durch einen zweiten Träger 12 aus Silizium abgeschlossen ist. Die Träger bilden die Stirnwände des Gehäuses. Das Gehäuse 10 enthält ein möglichst geringes Gasvolumen.

Der erste Träger 11 ist eine aus Siliziummaterial bestehende Platte, deren Dicke so groß ist, dass die Platte dem Atmosphärendruck standhalten kann. Der erste Träger 11 ist mit zahlreichen Durchbrechungen 13 versehen. Dies sind durchgehende Löcher. Auf der Außenseite des ersten Trägers 11 befindet sich die Membran 14 aus Palladium. Die Membran ist eine dünne Folie mit einer Stärke von etwa $1\mu m$.

An der Innenseite des Gehäuses ist der Träger 11 mit einer Vertiefung 15 versehen, welche von einem vorstehenden Rand 16 umgeben ist. Die Membran 14 kann entweder durch direkten Stromfluss beheizt werden, oder sie kann mit einer zusätzlichen Heizschicht versehen sein. Eine andere Möglichkeit sieht vor, den Träger 11 als ohmschen Heizer einzusetzen oder die Membran mit Hilfe eines Strahlungsheizers aufzuheizen. Bei dem vorliegenden Ausführungsbeispiel sind Stromanschlüsse 17, 18 für Heizstrom an der Membran 14 vorgesehen.

Der zweite Träger 12 besteht ebenfalls aus Silizium. Er enthält an der dem Gehäuseinneren zugewandten Seite eine Vertiefung 20, die von einem Rand 21 umgeben ist. In der Ausnehmung 20 ist an der Innenseite der Stirnwand ein Pirani-Sensor 22 befestigt. Dieser besteht aus Filamenten, die beispielsweise eine Wheatstone'sche Brücke bilden. An dem Pirani-Sensor ist ein Heizelement ausgebildet, dessen Wärme von dem die Membran 14 passierenden Wasserstoff transportiert wird. Hinsichtlich des Aufbaus und der Funktionsweise des Pirani-Drucksensors 22 wird verwiesen auf J. Vac. Sci. Technol. A 26(3), May/Jun 2008, Seiten 352-359.

Die Träger 11 und 12 können direkt aneinander gefügt werden. Dadurch wird ein minimal mögliches, gekapseltes Volumen erreicht. Dies ermöglicht eine sehr schnelle Sensorreaktion. Bei einem Volumen von $50mm^3$ ist eine Sensorzeitkonstante von 50ms erreichbar. Die Fügung der Membran und des Pirani-Filaments an dem jeweiligen Träger kann bei Verwendung von Silizium über Bondverfahren erfolgen. Es können aber auch Kleber verwendet werden, die eine ausreichende Temperaturbeständigkeit aufweisen.

Damit die Temperatur der geheizten Membran 14 den Betrieb des Pirani-Drucksensors 22 nur wenig beeinflusst, sind der erste Träger 11 und der zweite Träger 12 durch ein Verbindungsstück 25 auf Abstand gehalten, das hier aus einem Glasrohr besteht. Das Verbindungsstück 25 ist langgestreckt und enthält einen längslaufenden Kanal 26 von geringem Querschnitt. Die Querschnittsfläche des Kanals 26 beträgt maximal ein Fünftel der Fläche der Membran 14. Dadurch wird das Volumen des Gehäuses 10 gering gehalten, so dass sich kurze Ansprechzeiten des Sensors ergeben.

Das Volumen des Gehäuses 10 wird bei der Herstellung des Sensors evakuiert. Bei Verwendung des Sensors kann Wasserstoff aus der Atmosphäre die Membran 14 durchdringen, wobei sich im Inneren des Gehäuses 10 ein Gesamtdruck einstellt, .der gleich dem Wasserstoffpartialdruck außerhalb des Gehäuses ist. Dieser Druck wird mit dem Pirani-Drucksensor 22 gemessen.

Der Wasserstoffsensor ist besonders für einen Schnüffellecksucher geeignet, der ein stationäres Hauptgerät und einen relativ zu dem Hauptgerät bewegbaren Handgriff aufweist, an welchem sich die Schnüffelspitze befindet. Der Wasserstoffsensor ist so kleinformatig hergestellt, dass er in den Handgriff des Schnüffellecksuchers integriert werden kann. Bei einem Gasfluss von 30sccm und der Verwendung von Formiergas (5%-$H_2$) als Prüfgas ist mit der Partialdrucknachweisgrenze von $5 \cdot 10^{-4}$ mbar eine Leckrate von $5 \cdot 10^{-6}$ mbar • I/s nachweisbar.

In der Schnüffelapplikation wirkt sich der Wasserstoffanteil in Luft von ca. 0,5ppm positiv beim Signalnachweis aus. Hierdurch bedingt wird stets der Wasserstoffpartialdruck-Offset von $5 \cdot 10^{-4}$ mbar gemessen. Die Kennlinie des Pirani-Drucksensors erlaubt bei einem konstanten Druck-Offset eine feinere Signalauflösung, so dass Druckänderungen, die kleiner sind als $5 \cdot 10^{-4}$ mbar, nachweisbar sind.

**Patentansprüche**

1. Wasserstoffsensor mit einem druckdichten pumpenlosen Gehäuse (10), welches mit einer Membran (14) aus Palladium verschlossen ist, wobei die Membran auf einem ersten Träger (11) angeordnet ist, welcher zahlreiche Durchbrechungen (13) aufweist, und einem in dem Gehäuse (10) angeordneten nicht-gaszehrenden Drucksensor (22), der einen zweiten Träger (12) aufweist, wobei der erste und der zweite Träger (11,12) direkt aneinander gefügt oder durch ein Verbindungsstück (25) auf Abstand gehalten sind.

2. Wasserstoffsensor nach Anspruch 1, **dadurch gekennzeichnet, dass** die Membran (14) aus Palladium eine Dicke von weniger als $5\mu m$ aufweist.

3. Wasserstoffsensor nach Anspruch 1 oder 2, **da-**

**durch gekennzeichnet, dass** die wirksame Fläche der Membran (14) mindestens 1,5cm$^2$ beträgt, und dass das Verbindungsstück (25) einen Kanal (26) aufweist, der einen Querschnitt von maximal einem Fünftel der wirksamen Membranfläche aufweist.

4. Wasserstoffsensor nach einem der Ansprüche 1-3, **dadurch gekennzeichnet, dass** der erste und/oder der zweite Träger (11,12) aus porösem Silizium besteht.

5. Wasserstoffsensor nach einem der vorhergehenden Ansprüche, **dadurch gekennzeichnet, dass** er in den Handgriff eines Schnüffellecksuchers integriert ist.

6. Wasserstoffsensor nach einem der Ansprüche 1-5, **dadurch gekennzeichnet, dass** der Drucksensor (22) ein Wärmeleitungs-Drucksensor ist.

7. Wasserstoffsensor nach Anspruch 6, **dadurch gekennzeichnet, dass** der Wärmeleitungs-Drucksensor ein Pirani-Drucksensor ist.

8. Wasserstoffsensor nach Anspruch 1, **dadurch gekennzeichnet, dass** der nicht-gaszehrende Drucksensor ein Kapazitätsmanometer ist.

## Claims

1. A hydrogen sensor comprising a pressure-tight pump-less housing (10) closed off by a membrane (14) of palladium, the membrane being arranged on a first carrier (11) having a plurality of openings (13), and comprising a non-gas-consuming pressure sensor (22) arranged in the housing (10) and having a second carrier (12), wherein the first and the second carrier (11, 12) are joined directly to each other or are spaced apart by a connection piece (25).

2. The hydrogen sensor of claim 1, **characterized in that** the palladium membrane (14) has a thickness of less than 5 μm.

3. The hydrogen sensor of claim 1 or 2, **characterized in that** the effective surface area of the membrane (14) is at least 1.5 cm$^2$, and that the connection piece (25) includes a channel (26) with a cross section of at most one fifth of the effective membrane surface area.

4. The hydrogen sensor of one of claims 1-3, **characterized in that** the first and/or the second carrier (11, 12) is made of porous silicon.

5. The hydrogen sensor of one of the preceding claims, **characterized in that** it is integrated in the handle of a sniffer leak detector.

6. The hydrogen sensor of one of claims 1-5, **characterized in that** the pressure sensor (22) is a heat conduction pressure sensor.

7. The hydrogen sensor of claim 6, **characterized in that** the heat conduction pressure sensor is a Pirani pressure sensor.

8. The hydrogen sensor of claim 1, **characterized in that** the non gas consuming pressure sensor is a capacitance manometer.

## Revendications

1. Capteur d'hydrogène comprenant un boîtier (10) sans pompe étanche à la pression, fermé par une membrane (14) en palladium, la membrane étant disposée sur un premier support (11) pourvu de nombreuses ouvertures (13), et un capteur de pression (22) non consommateur de gaz, disposé dans le boîtier (10), qui présente un deuxième support (12), le premier et le deuxième supports (11, 12) étant directement assemblés bout à bout ou maintenus à distance par une pièce de liaison (25).

2. Capteur d'hydrogène selon la revendication 1, **caractérisé en ce que** la membrane (14) en palladium a une épaisseur inférieure à 5 μm.

3. Capteur d'hydrogène selon la revendication 1 ou 2, **caractérisé en ce que** la surface active de la membrane (14) est d'au moins 1,5 cm$^2$, et **en ce que** la pièce de liaison (25) présente un canal (26) dont la section transversale représente, au maximum, un cinquième de la surface active de la membrane.

4. Capteur d'hydrogène selon l'une des revendications 1 à 3, **caractérisé en ce que** le premier et/ou le deuxième support (11, 12) est/sont en silicium poreux.

5. Capteur d'hydrogène selon l'une des revendications précédentes, **caractérisé en ce qu'**il est intégré dans la poignée d'un détecteur renifleur de fuites.

6. Capteur d'hydrogène selon l'une des revendications 1 à 5, **caractérisé en ce que** le capteur de pression (22) est un capteur de pression à conduction thermique.

7. Capteur d'hydrogène selon la revendication 6, **caractérisé en ce que** le capteur de pression à conduction thermique est un capteur de pression Pirani.

8. Capteur d'hydrogène selon la revendication 1, **ca-**

**ractérisé en ce que** le capteur de pression non consommateur de gaz est un manomètre capacitif.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006008253 A1

- DE 10031882 A1, Leybold

**In der Beschreibung aufgeführte Nicht-Patentliteratur**

- J. Vac. Sci. Technol. A. American Vacuum Society, Mai 2008, vol. 26, 352-359

- *J. Vac. Sci. Technol. A,* Mai 2008, vol. 26 (3), 352-359